# EUROPÄISCHE PATENTSCHRIFT

(11) **EP 0 589 902 B1**
(45) Veröffentlichungstag und Bekanntmachung des Hinweises auf die Patenterteilung: **28.08.1996**
(21) Anmeldenummer: 92909594.1
(22) Anmeldetag: 15.05.1992
(51) Int. Cl.: G02B 6/12

(54) **INTEGRIERT OPTISCHE SCHALTUNG**
INTEGRATED OPTICAL CIRCUIT
CIRCUIT OPTIQUE INTEGRE

(30) Priorität: 19.06.1991 DE 4120198
(43) Veröffentlichungstag der Anmeldung: 06.04.1994
(73) Patentinhaber: ROBERT BOSCH GMBH, 70442 Stuttgart (DE)
(72) Erfinder: KRAGL, Hans, D-6105 Ober-Ramstadt (DE)
(86) Internationale Anmeldenummer: DE9200402
(87) Internationale Veröffentlichungsnummer: WO9222839

(56) Entgegenhaltungen:
- GB-A- 2 222 465

## Beschreibung

Die Erfindung geht aus von einer integriert optischen Schaltung nach der Gattung des Hauptanspruchs.

Integriert optische Schaltungen bestehen aus einem Trägermaterial (Substrat), auf das optische Strukturen aufgebracht bzw. in das optische Strukturen eingefügt sind. Von entscheidender Bedeutung ist dabei insbesondere die Möglichkeit, optische Wellenleiter mit niedriger Dämpfung herstellen zu können. Ausgehend von der Grundstruktur der Wellenleiter, können verschiedenartige Baugruppen, wie beispielsweise Koppler, Interferometer, Frequenzfilter und andere, realisiert werden.

Zur Realisierung von Wellenleitern, welche elektro-magnetische Wellen führen können, ist eine Ausbreitung des Feldes auf eine jeweils durch den Wellenleiter vorgegebene Richtung zu beschränken. Dazu ist eine "Isolierung" des zu führenden Feldes von der äußeren Umgebung erforderlich.

In der optischen Nachrichtentechnik werden in erster Linie Mittel der dielektrischen Isolation angewandt. Im sogenannten Kernbereich eines Wellenleiters befindet sich ein Material, welches einen höheren Brechungsindex hat als das den Kern umgebende Material, der sogenannte Mantelbereich. Dadurch fällt das geführte elektro-magnetische Feld in Richtung zum Mantel ohne Energiedissipation im wesentlichen exponentiell ab, so daß an der Mantelgrenze eine so geringe Feldstärke vorliegt, daß die dort auftretende Felddämpfung praktisch ohne Bedeutung ist. Diese Art der Wellenführung wird außer bei Glasfasern häufig in integriert optischen Wellenleitern angewendet.

Im Zusammenhang mit integriert optischen Wellenleitern ist ferner eine Wellenführung durch Höhenprofile bekannt, bei welcher die Feldausbreitung durch seitliche Verschmälerung der Kernzone eingeschränkt wird. Zur Anwendung bei aktiven optischen Bauelementen ist schließlich zur Wellenführung die Methode der Gewinnführung bekannt, bei welcher im Kernbereich des Wellenleiters ein Gebiet mit im Vergleich zur Umgebung des Mantels höherer Verstärkung erzeugt wird.

Aufgabe der Erfindung ist es, die Herstellbarkeit von integriert optischen Schaltungen zu verbessern, insbesondere Mittel zur Führung und/oder Beeinflussung des Wellenfeldes anzugeben, die durch Prozeßschritte hergestellt werden können, die auf dem Substrat durchgeführt werden.

Die erfindungsgemäße integriert optische Schaltung mit den kennzeichnenden Merkmalen des Hauptanspruchs hat den Vorteil, daß für das Substrat ein Werkstoff gewählt werden kann, dessen technische Bearbeitung gut beherrscht wird. Da in den zu realisierenden Wellenleiter-Strukturen das optische Feld vom Substrat ferngehalten wird, können gut zu bearbeitende Werkstoffe ohne Rücksicht auf deren optische Eigenschaften ausgewählt werden.

Die bei der erfindungsgemäßen integriert optischen Schaltung vorgesehene Schicht mit niedrigerem Brechungsindex kann wegen der geringen Dicke mit bekannten Verfahren aufgebracht werden. Außerdem ist bei der erfindungsgemäßen integriert optischen Schaltung eine Kopplung mit opto-elektrischen Bauelementen im Substrat vorgesehen.

Bei den bekannten Technologien zur Herstellung von integriert optischen Schaltungen werden auf dem Substrat optisch transparente Schichten aufgebracht, die je nach beabsichtigter Funktion des Bauelementes strukturiert und bearbeitet werden. Diese Strukturierung wird jedoch in einem Werkstoff ausgeführt, der wegen seiner optischen Eigenschaften, nicht jedoch wegen seiner Bearbeitkeit ausgewählt ist. Bei der erfindungsgemäßen integriert optischen Schaltung kann jedoch die Strukturierung weitgehend im Substrat erfolgen, so daß sich eine Strukturierung der darüberliegenden Schichten teilweise erübrigt. Eine Strukturierung der optischen Schicht ist bei der erfindungsgemäßen integriert optischen Schaltung jedoch nicht ausgeschlossen.

Bei der Erfindung ist vorgesehen, daß Durchbrüche in der Schicht hoher Leitfähigkeit vorgesehen sind, die zur optischen Kopplung mit im Substrat angeordneten opto-elektronischen Elementen dienen.

Diese Weiterbildungen sind selbst dann vorteilhaft, wenn die Strukturierung bezüglich der Wellenleiter an sich im Bereich der Wellenleiter und nicht im Substrat erfolgt.

Durch die in weiteren Unteransprüchen aufgeführten Maßnahmen sind weitere vorteilhafte Weiterbildungen und Verbesserungen der im Hauptanspruch angegebenen Erfindung möglich.

Für das Substrat eignet sich ein Werkstoff aus der Materialgruppe der IV-Halbleiter (Germanium, Silizium oder Germanium/Silizium-Legierungen) oder der III/V-Halbleiter (GaAs/AlGaAs, InP/InGaAsP). Grundsätzlich sind jedoch für das Substrat einer erfindungsgemäßen integriert optischen Schaltung auch andere Werkstoffe verwendbar.

Als Werkstoffe für die Schicht hoher Leitfähigkeit kommen Aluminium, Gold, Silber, Kupfer, jedoch auch Silizide und Titannitrit in Frage. Zur Verbesserung der Haftung zwischen der Leitschicht und der optisch transparenten Schicht kann nach dem Aufbringen der metallischen Leitschicht eine Haftschicht, beispielsweise aus PSG [(SiO₂)ₓ(P₂O₅)_{y}], aufgebracht werden. Dieses ist ein in der Halbleiter-Technologie an sich bekannter Prozeß. PSG ist optisch transparent und ermöglicht das anschließende Aufbringen von Glasschichten.

Ausführungsbeispiele der Erfindung sind in der Zeichnung anhand mehrerer Figuren schematisch dargestellt und in der nachfolgenden Beschreibung näher erläutert. Es zeigt:
- Fig. 1: ein Ausführungsbeispiel mit einem nicht strukturierten Substrat,
- Fig. 2: ein Ausführungsbeispiel mit einer V-Nutätzung des Substrats (Querschnitt senkrecht zur Wellenleiterachse),
- Fig. 3: einen Schnitt durch einen Wellenleiter in Ausbreitungsrichtung, der eine Bragg-Struktur bildet,
- Fig. 4: einen Schnitt durch einen Wellenleiter in Ausbreitungsrichtung, bei welchem eine Bragg-Struktur durch Unterbrechungen der Schicht hoher Leitfähigkeit realisiert ist,
- Fig. 5: eine Draufsicht auf einen Ausschnitt eines Ausführungsbeispiels, das einen Bragg-Reflektor darstellt,
- Fig. 6: einen Schnitt durch ein weiteres Ausführungsbeispiel und
- Fig. 7: verschiedene Feldverläufe zur weiteren Erläuterung der Erfindung.

Gleiche Teile sind in den Figuren mit gleichen Bezugszeichen versehen. Die Schicht hoher Leitfähigkeit wird im folgenden auch als Leitschicht, die Schicht mit niedrigerem Brechungsindex auch als dielektrische Zwischenschicht bezeichnet.

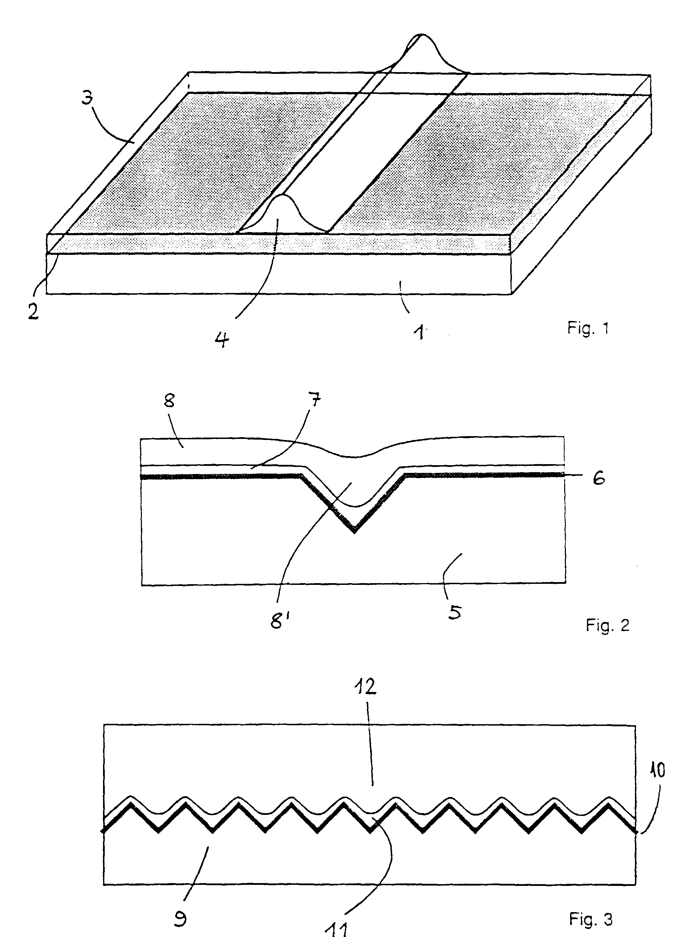

Bei der in Fig. 1 skizzierten integriert optischen Schaltung ist auf dem Substrat 1 eine Leitschicht 2 und eine 1 µm dicke Schicht 3 aus SiO₂ aufgebracht. Darauf befindet sich der Wellenleiterkern 4 aus SiO₂, z. B. mit Phosphor, dessen Brechungsindex höher als der Brechungsindex der Schicht 3 aus SiO₂ ist. Dadurch, daß der Brechungsindex des Wellenleiterkerns 4 auch höher als der Brechungsindex des umgebenden Mediums (Luft) ist, wird seitlich und nach oben eine Wellenführung ermöglicht. Eine gegebenenfalls aufzubringende Abdeckschicht muß ebenfalls einen geringeren Brechungsindex als der Wellenleiterkern 4 aufweisen.

Eine einfache Möglichkeit zur Herstellung von Wellenleitern mit Leitfähigkeitsisolation besteht in einer V-Nutätzung auf dem Substrat, was schematisch in Fig. 2 dargestellt ist.

Nach der Strukturierung des Substrats 5 (z. B. mit einer Bragg-Struktur) wird die Leitschicht 6 aufgebracht, die derart dünn ist, daß die Oberfläche der Leitschicht 6 die Struktur ebenfalls aufweist. Danach werden eine Schicht 7 mit niedrigerem Brechungsindex und eine Deckschicht 8 aufgebracht, welche die Wellenleiter darstellt.

Bei der erfindungsgemäßen integriert optischen Schaltung können Bragg-Strukturen durch eine geeignete Strukturierung der Leitschicht erzeugt werden. So kann beispielsweise das Substrat mit der Bragg-Struktur versehen und anschließend die leitfähige Schicht aufgebracht werden. Ein Beispiel dafür ist in Fig. 3 dargestellt. Auf dem entsprechend strukturierten Substrat 9 sind übereinander eine Leitschicht 10, eine Schicht 11 mit niedrigerem Brechungsindex und eine Deckschicht 12, die als Wellenleiter dient, aufgebracht.

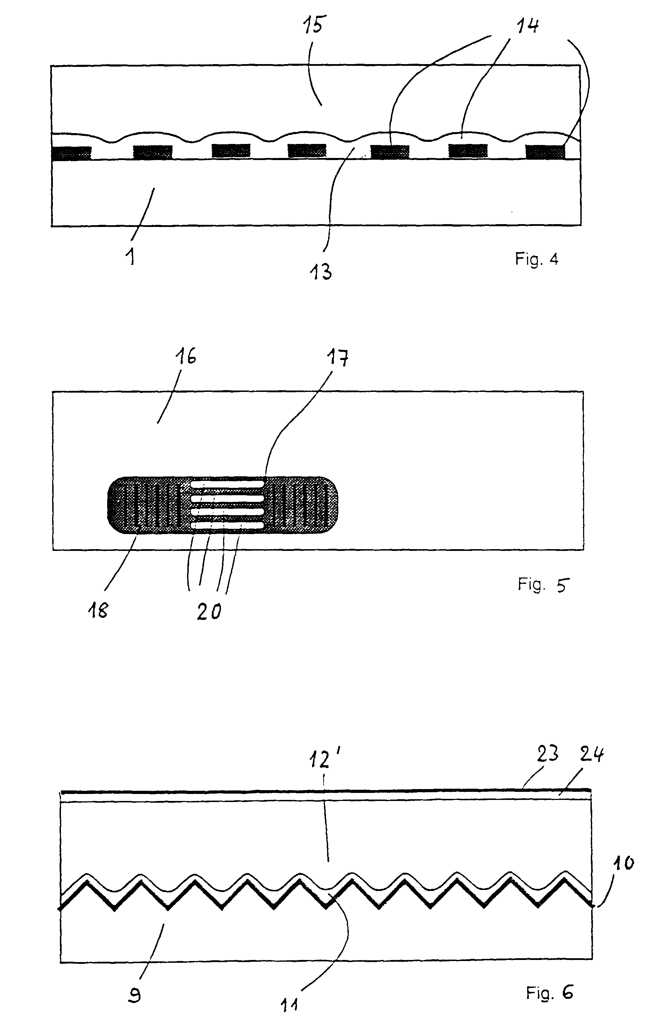

Werden beim Strukturieren der Leitschicht Löcher bzw. Langlöcher in der Leitschicht erzeugt, entsteht eine Wellenleiterstruktur, deren Schnitt in Ausbreitungsrichtung beispielhaft in Fig. 4 dargestellt ist. Periodische Unterbrechungen in der leitfähigen Schicht 14 führen zu periodischen Veränderungen des effektiven Brechungsindexes innerhalb des Wellenleitergebiets 15. Die dielektrische Zwischenschicht ist mit 13 bezeichnet.

Auf dem Substrat können pn-Übergänge hergestellt werden. Wird die zugehörige Diode vom Sperr- in den Durchlaßbereich geschaltet, findet eine Ladungsträgerinjektion statt, deren Folge eine Veränderung des Brechungsindexes ist. Ist die Leitschicht gegenüber dem Substrat durch eine dünne Isolationsschicht elektrisch isoliert, kann durch Anlegen einer elektrischen Spannung an die Leitschicht ein ähnlicher, den Brechungsindex verändernder Effekt erzielt werden. Durch Influenz wird dabei die Ladungsträgerdichte beeinflußt. Mit Hilfe von Durchbrüchen in der Leitschicht können dadurch das Feld und damit die optischen Übertragungseigenschaften des Wellenleiters beeinflußt werden.

Eine Anwendung dieses Effektes ist in Fig. 5 dargestellt, bei welchem auf einem Substrat 16 eine Leitschicht 17 aufgebracht ist. Die darüberliegende dielektrische Zwischenschicht sowie der Wellenleiter sind in Fig. 5 nicht sichtbar. In ähnlicher Weise wie bei dem Ausführungsbeispiel nach Fig. 3 sind zwei Bragg-Gitter 18, 19 angeordnet, zwischen denen sich in Ausbreitungsrichtung erstreckende Durchbrüche 20 in der Leitschicht 17 vorgesehen sind. Mit einer veränderbaren Spannung an der Leitschicht 17 gegenüber einer in Fig. 5 nicht dargestellten Gegenelektrode kann der Brechungsindex des Substrats 17 verändert werden. Damit kann das Verhalten des in Fig. 5 dargestellten Wellenfilters gesteuert werden.

Eine weitere Möglichkeit der Steuerung der Übertragungseigenschaften besteht darin, daß der Wellenleiter aus einem Werkstoff mit von der elektrischen Feldstärke abhängigem Brechungsindex besteht. Dieses ist beispielsweise bei Polymeren der Fall. Dabei kann gemäß Fig. 6 die Leitschicht 10 als eine Elektrode verwendet werden, während eine oberhalb des Wellenleiters 12' angeordnete Leitschicht 23 als Gegenelektrode dient. Dabei ist die Leitschicht 23 ebenfalls durch eine dielektrische Zwischenschicht 24 von dem Wellenleiter 12' getrennt, um eine unverhältnismäßig hohe Dämpfung zu vermeiden.

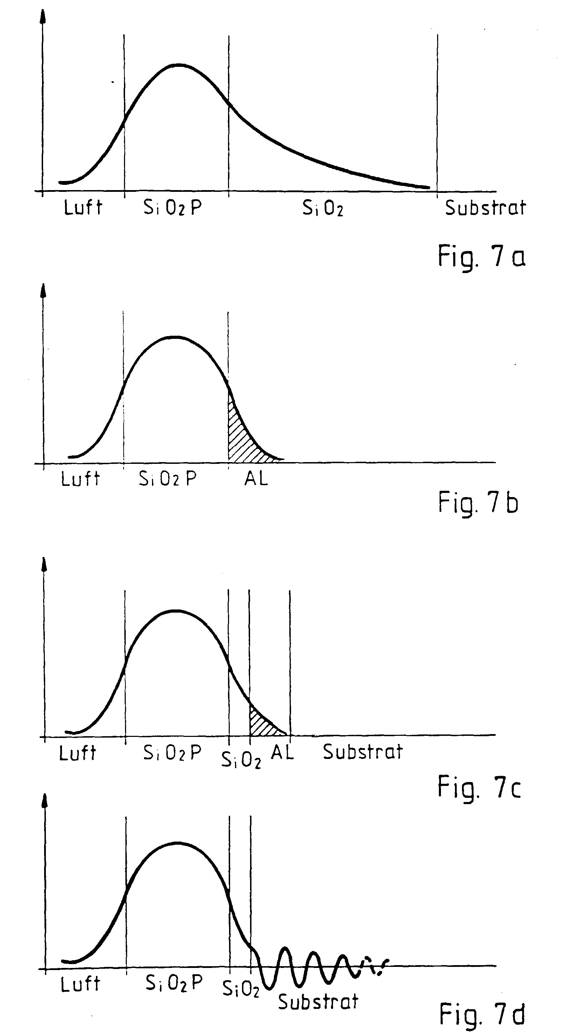

Im folgenden wird anhand von Fig. 7 schematisch der Feldverlauf bei einer bekannten und bei der erfindungsgemäßen integriert optischen Schaltung erläutert. Dabei sind die Schichtdicken etwa maßstäblich, die Feldstärke jedoch unter Überhöhung von kleinen Werten aufgetragen, um letztere überhaupt darstellen zu können. In allen Fällen wird ein Wellenleiter mit einer Dicke von 5 µm vorausgesetzt.

Bei der in Fig. 7a dargestellten bekannten integriert optischen Schaltung ist zur Wellenführung eine Schicht von beispielsweise 10 µm mit niedrigerem Brechungsindex vorgesehen. In dieser Schicht klingt die Feldstärke allmählich ab. An der von dem Wellenleiter entfernten Oberfläche der Schicht mit niedrigerem Brechungsindex ist die Feldstärke nahezu 0, woraus sich eine geringe Dämpfung im Lichtleiter ergibt. Wie eingangs erwähnt, sind derart dicke Schichten mit den in der Halbleiter-Technologie verwendeten Technologien schwierig herzustellen. Andererseits bereitet eine optische Ankopplung an das Substrat Schwierigkeiten.

Eine Wellenführung mit einer Leitschicht, wie sie beispielsweise in Hohlleitern duchgeführt wird, bedeutet jedoch eine extrem hohe Dämpfung im Wellenleiter, was in Fig. 7b schematisch dargestellt ist. Dabei schließt sich an den Wellenleiter aus SiO₂P eine Metallschicht aus Aluminium (Al) an, in welcher wegen der großen Feldstärke entsprechend hohe Verluste auftreten.

Bei dem in Fig. 7c dargestellten Schichtaufbau der erfindungsgemäßen integriert optischen Schaltung ist eine dielektrische Zwischenschicht aus SiO₂ mit einer Stärke von etwa 1 µm vorgesehen, an welche sich eine dünne Aluminiumschicht Al anschließt. Durch die Wirkung der Zwischenschicht ist die Feldstärke im Aluminium gegenüber Fig. 7b derart stark verringert, daß die Verluste auf Werte beschränkt sind, die bei den in integriert optischen Schaltungen vorkommenden Wellenleiterlängen akzeptiert werden können. Sowohl die Leitschicht aus Metall, die beispielsweise 0,1 µm dick sein kann, als auch die dielektrische Zwischenschicht lassen sich leicht mit bekannten Verfahren aufbringen.

Zur Ankopplung des Wellenleiters an ein im Substrat befindliches opto-elektrisches Bauelement wird die Leitschicht unterbrochen. Der dann im Substrat entstehende Feldverlauf ist in Fig. 7d angedeutet. Das Feld setzt sich dabei in das Substratmaterial hinein oszillatorisch mit einer verhältnismäßig geringen Dämpfung fort. Dadurch ist eine gute Ankopplung von opto-elektrischen Bauelementen möglich. An dieser Stelle erhöht sich die Dämpfung des Wellenleiters zwangsläufig, wie bei jeder Auskopplung von Energie.

## Patentansprüche

1. Integriert optische Schaltung mit auf ein Substrat aufgebrachten Wellenleitern mit Wellenleiterkernen (4, 8, 12, 12', 15), wobei zwischen dem Substrat (1, 5, 9, 16) und den Wellenleiterkernen (4, 8, 12, 12', 15) zuerst eine Schicht hoher elektrischer Leitfähigkeit (2, 6, 10, 14, 17) aufgebracht ist und darauf eine Schicht (3, 7, 11, 13) mit niedrigerem Brechungsindex als die Wellenleiterkerne (4, 8, 12, 12', 15) aufgebracht ist, dadurch gekennzeichnet, daß Durchbrüche in der Schicht hoher Leitfähigkeit (2, 6, 10, 14, 17) vorgesehen sind, und opto-elektronische Elemente im Substrat (1, 5, 9, 16) angeordnet sind, die durch die Durchbrücke mit den Wellenleiten optisch gekoppelt sind.

2. Integriert optische Schaltung nach Anspruch 1, dadurch gekennzeichnet, daß die Schicht (3, 7, 11, 13) mit niedrigerem Brechnungsindex eine Stärke von ≤ 2 µm aufweist.

3. Integriert optische Schaltung nach Anspruch 1 oder 2, dadurch gekennzeichnet, daß die Schicht (2, 6, 10, 14, 17) hoher Leitfähigkeit aus einem metallischen Werkstoff besteht.

4. Integriert optische Schaltung nach einem der Ansprüche 1 bis 3, dadurch gekennzeichnet, daß das Wellenfeld im Wellenleiterkern (8), 12, 15) in lateraler Richtung der Oberfläche des Substrats (1, 5, 9, 16) und/oder vom Substrat weg dielektrisch geführt wird.

5. Integriert optische Schaltung nach einem der Ansprüche 1 bis 4, dadurch gekennzeichnet, daß das Substrat (5, 9) mit einer eine Schaltung bildenden Struktur versehen ist und daß die Dicke der Schicht (6, 10) hoher Leitfähigkeit kleiner als die Tiefe der Strukturen ist.

6. Integriert optische Schaltung nach Anspruch 5, dadurch gekennzeichnet, daß das Substrat (1) eine ebene Oberfläche aufweist und daß die Strukturen in der entsprechend dicken Schicht (14) hoher Leitfähigkeit vorgesehen sind.

7. Integriert optische Schaltung nach einem der vorhergehenden Ansprüche, dadurch gekennzeichnet, daß ein Wellenleiterkern (12') aus einem Werkstoff mit von der elektrischen Feldstärke abhängigem Brechungsindex besteht und daß die Schicht (10) hoher Leitfähigkeit und eine weitere leitende Schicht (23) Elektroden zur Zuführung eines elektrischen Feldes bilden.

8. Integriert optische Schaltung nach Anspruch 7, dadurch gekennzeichnet, daß zwischen die weitere leitende Schicht (23) und dem Wellenleiterkern (12') eine weitere Schicht (24) mit niedrigerem Brechungsindex eingefügt ist.

## Claims

1. Integrated optical circuit having waveguides, with waveguide cores (4, 8, 12, 12', 15), applied onto a substrate, a layer (2, 6, 10, 14, 17) with high electrical conductivity being firstly applied between the substrate (1, 5, 9, 16) and the waveguide cores (4, 8, 12, 12', 15) and a layer (3, 7, 11, 13) with lower refractive index than the waveguide cores (4, 8, 12, 12', 15) being applied onto the former layer, characterized in that apertures in the layer (2, 6, 10, 14, 17) with high conductivity are provided, and optoelectronic elements which are optically coupled to the waveguides by the apertures are arranged in the substrate (1, 5, 9, 16).

2. Integrated optical circuit according to Claim 1, characterized in that the layer (3, 7, 11, 13) with lower refractive index has a thickness of ≤ 2 µm.

3. Integrated optical circuit according to Claim 1 or 2, characterized in that the layer (2, 6, 10, 14, 17) with high conductivity consists of a metallic material.

4. Integrated optical circuit according to one of Claims 1 to 3, characterized in that the wave field in the waveguide core (8, 12, 15) is dielectrically guided in the lateral direction of the surface of the substrate (1, 5, 9, 16) and/or away from the substrate.

5. Integrated optical circuit according to one of Claims 1 to 4, characterized in that the substrate (5, 9) is provided with a structure which forms a circuit, and in that the thickness of the layer (6, 10) with high conductivity is less than the depth of the structures.

6. Integrated optical circuit according to Claim 5, characterized in that the substrate (1) has a planar surface, and in that the structures are provided in the correspondingly thick layer (14) with high conductivity.

7. Integrated optical circuit according to one of the preceding claims, characterized in that a waveguide core (12') consists of a material having a refractive index which depends on the electric field strength, and in that the layer (10) with high conductivity and a further conductive layer (23) form electrodes for applying an electric field.

8. Integrated optical circuit according to Claim 7, characterized in that a further layer (24) with lower refractive index is inserted between the further conductive layer (23) and the waveguide core (12').

## Revendications

1. Circuit optique intégré comportant des guides d'ondes sur un substrat avec des coeurs de guides d'ondes (4, 8, 12, 12', 15), et entre le substrat (1, 5, 9, 16) et les coeurs des guides d'ondes (4, 8, 12, 12', 15) on applique tout d'abord une couche de conductivité électrique élevée (2, 6, 10, 14, 17) et sur celle-ci une couche (3, 7, 11, 13) à indice de réfraction plus faible que celui des coeurs des guides d'ondes (4, 8, 12, 12', 15),
caractérisé par
des ouvertures dans la couche de forte conductivité (2, 6, 10, 14, 17), des éléments optoélectroniques étant prévus dans le substrat (1, 5, 9, 16) qui sont couplés de manière optique à travers les passages vers les guides d'ondes.

2. Circuit optique intégré selon la revendication 1,
caractérisé en ce que
la couche (3, 7, 11, 13) à faible indice de réfraction a une épaisseur d'environ ≤ à 2 µm.

3. Circuit optique intégré selon la revendication 1 ou 2,
caractérisé en ce que
la couche (2, 6, 10, 14, 17) de conductivité élevée est en une matière métallique.

4. Circuit optique intégré selon l'une des revendications 1 à 3,
caractérisé en ce que
le champ d'ondes dans le coeur de guide d'ondes (8, 12, 15) est guidé dans la direction latérale de la surface supérieure du substrat (1, 5, 9, 16) et/ou en s'écartant du substrat, de manière diélectrique.

5. Circuit optique intégré selon l'une des revendications 1 à 4,
caractérisé en ce que
le substrat (5, 9) est muni d'une structure formant un circuit et l'épaisseur de la couche (6, 10) a une conductivité élevée inférieure à la profondeur des structures.

6. Circuit optique intégré selon la revendication 5,
caractérisé en ce que
le substrat (1) présente une surface supérieure plane et des structures sont prévues dans la couche épaisse correspondante (14) de forte conductivité.

7. Circuit optique intégré selon l'une quelconques des revendications précédentes,
caractérisé par
un coeur de guide d'ondes (12') en une matière à indice de réfraction dépendant fortement de l'intensité du champ électrique et la couche (10) de forte conductivité ainsi qu'une autre couche conductrice (23) forment les électrodes pour former un champ électrique.

8. Circuit optique intégré selon la revendication 7,
caractérisé en ce que
entre l'autre couche conductrice (23) et le coeur de guide d'ondes (12') est insérée une autre couche (24) à indice de réfraction plus faible.
